**Europäisches Patentamt**

**European Patent Office**

**Office européen des brevets**

(19)

(11) Veröffentlichungsnummer : **0 394 198 B1**

(12) # EUROPÄISCHE PATENTSCHRIFT

(45) Veröffentlichungstag der Patentschrift :
**30.09.92 Patentblatt 92/40**

(51) Int. Cl.$^5$ : **B65G 33/24,** B65G 45/00,
**A01K 1/01**

(21) Anmeldenummer : **90810302.1**

(22) Anmeldetag : **18.04.90**

(54) **Dung- und Komposträumeinrichtung.**

(30) Priorität : **21.04.89 CH 1522/89**

(43) Veröffentlichungstag der Anmeldung :
**24.10.90 Patentblatt 90/43**

(45) Bekanntmachung des Hinweises auf die
Patenterteilung :
**30.09.92 Patentblatt 92/40**

(84) Benannte Vertragsstaaten :
**AT BE CH DE DK FR GB IT LI LU NL**

(56) Entgegenhaltungen :
**EP-A- 0 225 291
DE-C- 38 177**

(56) Entgegenhaltungen :
**DE-C- 370 281
DE-C- 920 656
DE-U- 8 807 900
GB-A- 1 426 181
US-A- 3 337 026**

(73) Patentinhaber : **Krebs, Arthur
Rennweg12
CH-8633 Wolfhausen (CH)**

(72) Erfinder : **Krebs, Arthur
Rennweg12
CH-8633 Wolfhausen (CH)**

(74) Vertreter : **Bosshard, Ernst
Schulhausstrasse 12
CH-8002 Zürich (CH)**

## Beschreibung

Die Erfindung bezieht sich auf eine Dung- und Komposträumeinrichtung, mit einer oben offenen Schale, mit einem an die Schale anschliessenden, umfangsgeschlossenen Förderrohr und mit einer in der Schale und im Förderrohr angeordneten, motorisch angetriebenen Förderschnecke.

Aus der DE-C 038 177 ist eine steile oder aufrechte Förderschnecke für Kohle bekannt, bei der an einem umfangsgeschlossenen Rohr an der Innenwand Anschlagschienen vorhanden sind, mit denen eine Drehung des zu fördernden Gutes verhindert werden soll. Diese Anschlagschienen bilden eine feste Stütze für die Schnecke. Eine solche Fördervorrichtung mag für körniges oder brockenartiges Fördergut - wie Kohle - brauchbar sein, nicht jedoch für verstopfungsanfälliges, längsfasriges Halmgut.

Aus der EP-A-0225291 ist eine für Ställe bestimmte Dungräumeinrichtung für Flüssigmist oder dickflüssigen Kuh-Dung bekannt. Dieser wird mittels einer motorisch angetriebenen Förderschnecke transportiert. Die Förderschnecke liegt dabei in einer oben offenen Schale und mündet in ein am Umfang geschlossenes Förderrohr ein. Die Schale hat dabei im Querschnitt entweder etwa die Form eines Halbkreises mit wesentlich grösserem Radius als die Förderschnecke oder einen U-förmigen Querschnitt.

Obschon solche Fördereinrichtungen für Kuhställe geeignet sind und sich bewährt haben, ergeben sich Schwierigkeiten, wenn Mist mit Langfasern aus Pferdeställen, Schafmist, Mist vermischt mit Stroh oder Kompost in solchen mit einer Förderschnecke versehenen Räumeinrichtungen gefördert werden sollen. Im Gegensatz zu Mistemulsionen besteht hier die Schwierigkeit darin, dass sich Langfaser-Festmist an der Förderschnecke festwickelt und einen zusammen mit der Förderschnecke drehenden Pfropfen bildet, welcher die Förderschnecke verstopft. Es sind bereits zahlreiche Versuche gemacht worden, diesem Nachteil abzuhelfen, indem beispielsweise die Steigung der Förderschnecke verändert, das Spiel zwischen Förderschnecke und Förderrohr vergrössert oder verkleinert oder die Oberfläche der Förderschnekke besonders behandelt oder zusätzlich Wasser beigemischt wurde. Alle diese Versuche blieben erfolglos.

Die mit der Erfindung zu lösende Aufgabe besteht darin, eine Dung- und Komposträumeinrichtung für Langfaser-Festmist und Kompost zu schaffen, bei der sich die Verstopfungsgefahr beheben lässt.

Diese Aufgabe wird durch eine Dung- und Komposträumeinrichtung mit den Merkmalen des Anspruchs 1 gelöst.

Dadurch wird verhindert, dass sich langfasiges Gut um die Förderschnecke herumwickeln kann und einen mitdrehenden, die Förderung verhindernden Zapfen bildet.

In der Zeichnung sind Ausführungsbeispiele des Erfindungsgegenstandes dargestellt. Es zeigen:

Fig. 1 eine schematische Gesamt-Darstellung der Einrichtung

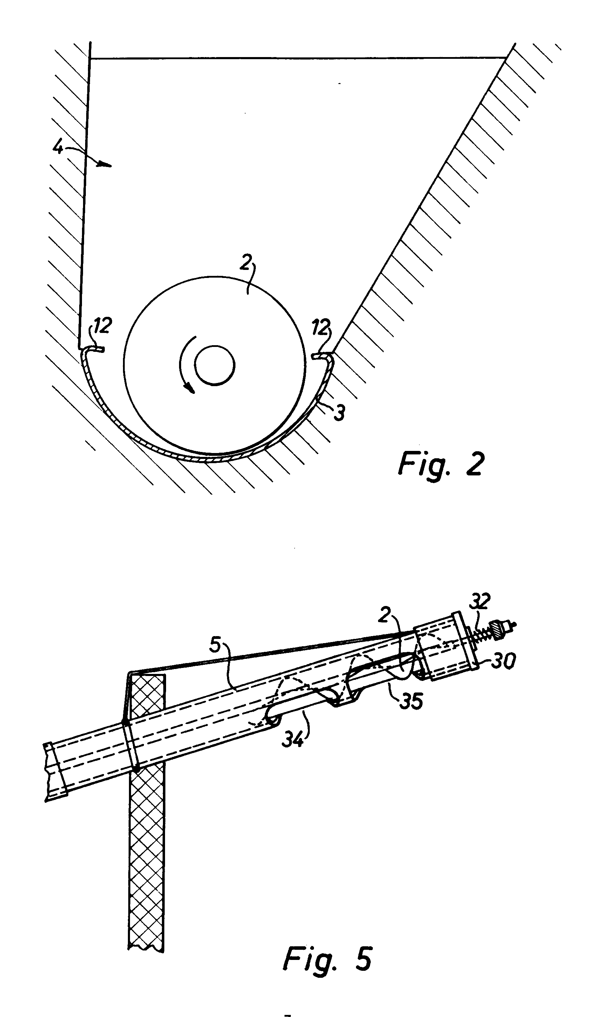

Fig. 2 einen Schnitt nach der Linie II-II in Fig. 1

Fig. 3 einen Schnitt nach der Linie III-III in Fig. 1

Fig. 4 einen Querschnitt durch eine Ausführungsvariante durch das Förderrohr

Fig. 5 eine Ansicht des Förderrohrendes mit Auslassöffnungen

Die Einrichtung enthält eine Förderschnecke 2, die in einer im Querschnitt angenähert halbkreisförmigen Schale 3 drehbar angeordnet ist. Diese Schale 3 befindet sich am Grund eines oben offenen, im Querschnitt vorzugsweise V-förmigen Schachtes 4 oder einer Grube und ist am Schachtgrund einbetoniert. In einem anschliessenden Teil ragt die Förderschnecke 2 in ein am Umfang geschlossenes Förderrohr 5 hinein, das vorzugsweise nach oben geneigt ist.

Der Antrieb der am Umfang scharfkantigen Förderschnecke 2 wird durch einen wasserdicht gekapselten Elektromotor 6 bewirkt, der mit einem Getriebe 7 verbunden ist. Die ortsfeste Lagerung erfolgt durch einen Gehäusefuss 8 und eine Lagerplatte 9 an einer Vertikalwand 10 des Schachtes 4.

Die Schale 3 besteht aus einem möglichst abriebfesten Kunststoff, vorzugsweise Polyäthylen. Sie hat einen Teilkreisquerschnitt und enthält an ihren beiden Längsrändern einwärts gebogene Lappen 12. Die Herstellung erfolgt vorzugsweise aus einem in der Längsmitte entzweigeschnittenen Rohr, so dass halbkreisförmige Rohrschalen gebildet werden. Die Längsränder 12 werden hernach umgebogen. Der Durchmesser der Förderschnecke 2 ist etwa 20-30 % geringer als der lichte Abstand zwischen den Enden der Lappen 12. Bei einer bevorzugten Ausführungsform beträgt der Radius der Förderschnecke 2 etwa 110 mm, der Innen-Radius der Schale etwa 190 mm und jede Lappenbreite etwa 50 mm. Diese besonders einfach herstellbare Schalenform bewirkt, dass sich das Langfaser-Gut an den Lappen 12 verfängt und dadurch ein Mitdrehen des zu förderndes Gutes mit der Förderschnecke 2 verhindert wird.

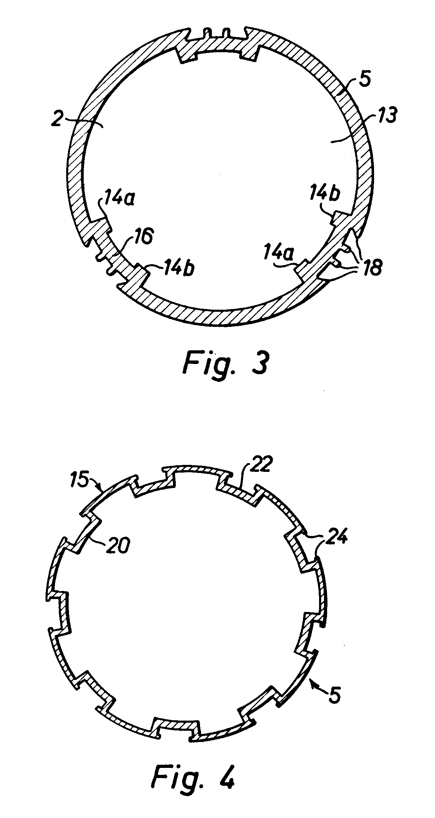

Das in eine Schachtmauer 11 einbetonierte, an die oben offene Schale 3 direkt anschliessende Förderrohr 5 besteht ebenfalls aus abriebfesten Kunststoff, vorzugsweise Polyäthylen. Seine Innenfläche enthält gemäss Fig. 3 Längsrippen 14a, 14b die mit dem Rohrmaterial ein einziges Stück bilden. Es sind vorzugsweise drei Zwillingsrippen 14a, 14b vorhanden, die auf der Innenfläche angenähert gleichmässig verteilt sind. Diese Zwillingsrippen 14a, 14b ragen je von einem einwärts versetzten Stegteil 16 ab, an dessen Aussenseiten sich Verankerungsorgane 18 zur Verankerung im Beton befinden. Diese Verankerungsorgane 18 können unterschiedliche Formen haben, beispielsweise Hinterschnitte. Zwischen diesen Längsrippen 14a, 14b und der Förderschnecke 2 besteht radiales Spiel, das zwischen Förderschnecke 2 und den Rippen 14a, 14b etwa 20-30 % des Schneckendurchmessers beträgt. Ein bevorzugtes Ausführungsbeispiel hat folgende Abmessungen: Durchmesser der Förderschnecke 150-220 mm, Förderrohr-Innendurchmesser ca. 300 mm, radiale Höhe einer Rippe 12-14 mm.

Die Drehlage des Förderrohr 5 wird vorzugsweise so gewählt, dass die Zwillingsrippen 14a, 14b praktisch einen Uebergang und eine Fortsetzung zu den Lappen 12 bilden.

Eine Ausführungsvariante der Querschnittsform eines Förderrohres 2 geht aus Fig. 4 hervor. Dieses Förderrohr 15 ist am Umfang profiliert und enthält beispielsweise neun nach innen vorspringende Teilstücke 20. An der Aussenseite sind die Nuten 22 durch gegeneinander gerichtete Ansätze 24 verengt und bilden somit Hinterschnitte zur Verankerung im Beton.

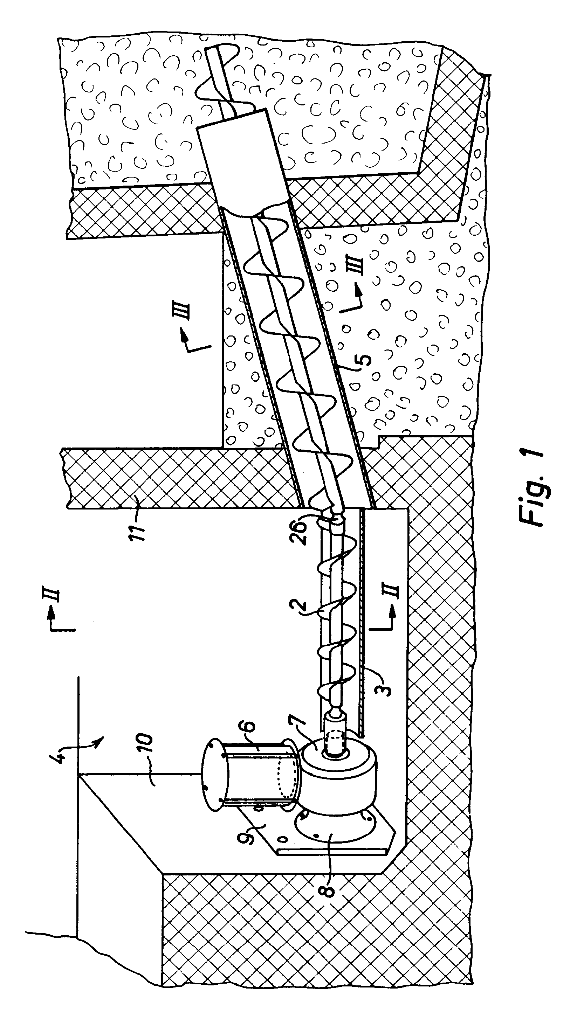

Bei der Ausführungsform gemäss Fig. 1 enthält die Förderschnecke 2 am Eingang zum Förderrohr 5 eine Gelenkkupplung 26. Das Ende der Förderschnecke 2 ragt oben über das Rohrende hinaus und ermöglicht eine Verteilung des ausgestossenen Gutes auf dem Mist-oder Komposthaufen.

In Fig. 5 ist eine Ausführungsform dargestellt, bei der das obere Rohrende durch einen Deckel 30 verschlossen ist. Mit dem Ende der Förderschnecke 2 ist eine Zugfeder 32 verbunden, die sich gegen den Deckel 30 abstützt. Für den Auswurf des durch die Förderschnecke 2 transportierten Gutes sind zwei sich am Rohrmantel befindende, längliche, seitliche Auslassöffnungen 34,35 vorhanden.

Eine Ausführungsvariante zu Fig. 5 besteht darin, dass die Abstützung des Förderschnecken-Endes statt durch eine Deckel durch einen am Umfang des Förderrohres 5 starr befestigten Bügel oder Haltebock erfolgt. Die Abstützstelle des Bügels an der Förderschnecke 2 liegt dann ausserhalb des Förderrohr-Endes. Auch hier ist - funktionsgleich wie bei Fig. 5 - eine mit der Förderschnecke 2 zusammenwirkende Zugfeder 32 vorhanden. Der letzte Gang der Förderschnecke 2 ist vorzugsweise mit einem diesen Gang ausfüllenden Auswurf-Löffel für den sicheren Auswurf des Fördergutes versehen.

An Stelle der Längsrippen 14, 14b könnten im Förderrohr 5 auch angeschraubte metallische in Rohrlängsrichtung verlaufende Schienen oder andere Schikanen vorhanden sein.

Der Aussendurchmesser der Förderschnecke 2 kann im Bereich der Schale 3 und des Förderrohres 5 gleich oder unterschiedlich sein, insbesondere kann die Förderschnecke 2 im Förderrohr 5 einen etwas grösseren Durchmesser haben.

## Patentansprüche

1. Dung- und Komposträumeinrichtung, mit einer oben offenen Schale (3), mit einem an die Schale (3) anschliessenden, umfangsgeschlossenen Förderrohr (5) und mit einer in der Schale und im Förderrohr angeordneten, motorisch angetriebenen Förderschnecke (2), dadurch gekennzeichnet, dass zum Transport von langfaserhaltigem Gut die Schale (3) mit einwärts ragenden Längsrändern (12) versehen ist und das Förderrohr (5) mit mindestens einer von ihrer Innenwand in den Hohlraum (13) hineinragenden Längsrippe (14a, 14b) oder Schikane versehen ist.

2. Dung- oder Komposträumeinrichtung nach Patentanspruch 1, dadurch gekennzeichnet, dass im Förderohr- Hohlraum (13) mehrere zueinander winkelversetzt angeordnete, mit dem Material des Förderrohres (5) ein einziges Stück bildende Längsrippen (14a, 14b) vorhanden sind, denen gegenüber die Förderschnecke (2) Spiel hat.

3. Dung- und Komposträumeinrichtung nach Anspruch 2, dadurch gekennzeichnet, dass an der Innenwand des aus Kunststoff bestehenden Förderrohres (5) je drei etwa gleichmässig verteilt angeordnete Zwillings-Rippen (14a, 14b) vorhanden sind, die einstückig von einem radial einwärts versetzten Stegteil (16) abragen und an der Aussenseite des Stegteiles Verankerungsorgane (18) zur Lagesicherung des Förderrohres (5) im Umgebungsmaterial vorhanden sind.

4. Dung- und Komposträumeinrichtung nach Patentanspruch 1 oder 2, dadurch gekennzeichnet, dass die Förderschnecke (2) an ihrem Umfang scharfkantig ausgebildet ist.

5. Dung- und Komposträumeinrichtung nach einem der Ansprüche 1-4, dadurch gekennzeichnet, dass sich die Förderschnecke (2) über das Förderrohr-Ende hinaus erstreckt.

6. Dung und Komposträumeinrichtung nach einem der Ansprüche 1-5, dadurch gekennzeichnet, dass sich nahe am Förderrohr-Ende mindestens eine längliche nach unten oder seitwärts gerichtete Auswurf-Oeffnung (34, 35) befindet.

7. Dung- und Komposträumeinrichtung nach Anspruch 6, dadurch gekennzeichnet, dass das Förderrohr-Ende durch einen Deckel (30) oder Bügel abgestützt ist und auf die Förderschnecke (2) eine sich am Deckel (30) oder Bügel abstützende Zugfeder (32) wirkt.

8. Dung- und Komposträumeinrichtung nach einem der Ansprüche 1-7, dadurch gekennzeichnet, dass je zwei Rippen oder Zwillingsrippen (14a, 14b) einen Übergang zu den Längsrändern (12) der Schale (3) bilden.

9. Dung- und Komposträumeinrichtung nach den Ansprüchen 5 und 7, dadurch gekennzeichnet, dass der Bügel am Umfang des Förderrohres (5) starr befestigt ist und die Bügel-Abstützstelle der Förderschnecke (2) sich ausserhalb des Förderrohr-Endes befindet.

**Claims**

1. A dung and compost clearing device, having a shell (3) open at the top, having a conveyor pipe (5) connected to the shell (3) and closed at the periphery and having a motor-powered screw conveyor (2) disposed in the shell and in the conveyor pipe,
**characterised in that** to transport material containing long fibres the shell (3) is provided with inwardly projecting longitudinal edges (12) and the conveyor pipe (5) is provided with at least one longitudinal rib (14a, 14b) or baffle projecting from its internal wall into the cavity (13).

2. A dung or compost clearing device according to Claim 1,
**characterised in that** in the conveyor pipe cavity (13) are provided several longitudinal ribs (14a, 14b), which are angularly offset with respect to one another and form a single piece with the material of the conveyor pipe (5), with respect to which the screw conveyor (2) has clearance.

3. A dung and compost clearing device according to Claim 2,
**characterised in that** on the internal wall of the conveyor pipe (5) made of plastic there are three pairs of ribs (14a, 14b), which are distributed roughly evenly and which protrude in one piece from a radially inwardly offset web part (16), and attachment members (18) are provided on the outside of the web part to ensure the position of the conveyor pipe (5) in the surrounding material.

4. A dung and compost clearing device according to Claim 1 or 2,
**characterised in that** the screw conveyor (2) is constructed with sharp edges on its periphery.

5. A dung and compost clearing device according to one of Claims 1 to 4,
**characterised in that** the screw conveyor (2) extends over the end of the conveyor pipe.

6. A dung and compost clearing device according to one of Claims 1 to 5,
**characterised in that** close to the end of the conveyor pipe there is located at least one oblong, downwardly or laterally directed ejection aperture (34, 35).

7. A dung and compost clearing device according to Claim 6,
**characterised in that** the end of the conveyor pipe is supported by a cover (30) or bracket and a tension spring (32) supported on the cover (30) or bracket acts on the screw conveyor (2).

8. A dung and compost clearing device according to one of Claims 1 to 7,
**characterised in that** two ribs or pairs of ribs (14a, 14b) form a transition to the longitudinal edges of the shell (3).

9. A dung and compost clearing device according to Claims 5 and 7,
**characterised in that** the bracket is rigidly attached to the periphery of the conveyor pipe (5) and the bracket support point of the screw conveyor (2) is located outside the end of the conveyor pipe.

EP 0 394 198 B1

**Revendications**

1. Installation pour déblayer le fumier et le compost, comprenant une coquille (3) ouverte en haut, un conduit de transport (5) fermé à la périphérie et se raccordant à la coquille (3) et une vis sans fin (2) installée dans la coquille et dans le conduit de transport et entraînée par un moteur, caractérisée en ce que pour le transport de matières contenant des fibres longues, la coquille (3) est munie de bords longitudinaux (12) en saillie vers l'intérieur et en ce que le conduit de transport (5) est muni d'au moins une nervure longitudinale (14a, 14b) ou chicane en saillie vers l'intérieur depuis sa paroi interne dans la cavité (13).

2. Installation pour déblayer le fumier et le compost selon la revendication 1, caractérisée en ce que dans la cavité (13) du conduit de transport, il est prévu plusieurs nervures longitudinales (14a, 14b) qui sont disposées avec un décalage angulaire entre elles et qui constituent une seule pièce avec le matériau du conduit de transport (5), la vis sans fin (2) présentant du jeu par rapport à elles.

3. Installation pour déblayer le fumier et le compost selon la revendication 2, caractérisée en ce que chaque fois trois nervures doubles (14a, 14b) disposées selon une répartition à peu près régulière sont prévues sur la paroi interne du conduit de transport (5) en matière plastique, ces nervures étant en saillie d'un seul tenant à partir d'un voile (16) décalé radialement vers l'intérieur, et en ce que des organes d'ancrage (18) sont présents sur la face externe du voile pour fixer en position le conduit de transport (5) dans la matière environnante.

4. Installation pour déblayer le fumier et le compost selon la revendication 1 ou la revendication 2, caractérisée en ce que la vis sans fin (2) est conçue à bords vifs sur sa périphérie.

5. Installation pour déblayer le fumier et le compost selon l'une quelconque des revendications 1 à 4, caractérisée en ce que la vis sans fin (2) s'étend au-delà de l'extrémité du conduit de transport.

6. Installation pour déblayer le fumier et le compost selon l'une quelconque des revendications 1 à 5, caractérisée en ce qu'au moins un orifice d'évacuation (34, 35) oblong orienté vers le bas ou latéralement est situé à proximité de l'extrémité du conduit de transport.

7. Installation pour déblayer le fumier et le compost selon la revendication 6, caractérisée en ce que l'extrémité du conduit de transport est soutenue par un couvercle (30) ou un étrier et en ce qu'un ressort de traction (32) prenant appui contre le couvercle (30) ou l'étrier agit sur la vis sans fin (2).

8. Installation pour déblayer le fumier et le compost selon l'une quelconque des revendications 1 à 7, caractérisée en ce que chaque fois deux nervures ou nervures doubles (14a, 14b) constituent un raccord vers les bords longitudinaux (12) de la coquille (3).

9. Installation pour déblayer le fumier et le compost selon les revendications 5 et 7, caractérisée en ce que l'étrier est rigidement fixé sur la périphérie du conduit de transport (5) et en ce que le point d'appui de la vis sans fin (2) sur l'étrier se trouve à l'extérieur de l'extrémité du conduit de transport.

Fig. 1

Fig. 2

Fig. 5

Fig. 3

Fig. 4